# EUROPEAN PATENT APPLICATION

(11) **EP 4 814 743 A1**
(43) Date of publication of application: **30.09.2026**
(21) Application number: 26161072.9
(22) Date of filing: 26.02.2026
(51) Int. Cl.: G06F 16/29

(54) **SYSTEMS AND METHODS FOR INTERNALIZATION OF MAP TILES**

(30) Priority: 25.03.2025 US 202563777184 P; 15.05.2025 US 202519209659
(71) Applicant: Palantir Technologies Inc., Aventura, Florida 33180 (US)
(72) Inventor: GLIDDEN, Reese, Washington (US); RABOIN, Eric, Great Falls (US); PATEL, Ashish, Washington (US); MARGULIES, Natalie, New York (US)
(74) Representative: Derry, Paul Stefan

(57) **Abstract**

In some examples, systems and methods for using map data are provided. An example method for collaborative map use is provided. In some examples, the method includes receiving a first request of a map of a specific geographic area from a first user device; receiving a first language code that corresponds to a first language preferred by a first user associated with the first user device; selecting a first map tile variant from a plurality of map tile variants based on the first language code; and transmitting an indication of the first map tile variant to the first user device to display a first map of the specific geographic area using the first map tile variant, the first displayed map including one or more first text strings in the first language.

## Description

This application claims priority to U.S. Provisional Application No. 63/777,184, filed March 25, 2025, and U.S. Application No. 19/209,659, filed May 15, 2025.

### TECHNICAL FIELD

Certain embodiments of the present disclosure relate to map data (e.g., map tiles). More particularly, certain embodiments of the present disclosure relate to internationalization of map data.

### BACKGROUND

In some examples, raster images are composed of pixels and are typically used for photographs and/or complex images with varying shades of color. Comparatively, in some examples, vector images are composed of geometric shapes defined by one or more mathematical equations. In certain examples, vector images are resolution independent, which means they can be resized to different dimensions without a loss of quality. In some examples, a mapping application allows a user to visualize and interact with geospatial data through an interactive map. In certain examples, a map tile is an image file (e.g., raster image, vector image, etc.) that represents a geographic area. Since geospatial data is also typically very large in size, displaying the data significantly increases the system demand on input/output, bandwidth and/or processing time.

Hence, it is desirable to improve techniques for map tiles.

### SUMMARY

Certain embodiments of the present disclosure relate to map data (e.g., map tiles). More particularly, certain embodiments of the present disclosure relate to internationalization of map data.

At least some aspects of the present disclosure are directed to a method for collaborative map use. In some examples, the method includes receiving a first request of a map of a specific geographic area from a first user device; receiving a first language code that corresponds to a first language preferred by a first user associated with the first user device; selecting a first map tile variant from a plurality of map tile variants based on the first language code, each map tile variant of the plurality of map tile variants covering a same geographic area and including one or more respective text strings that are semantically equivalent; and transmitting an indication of the first map tile variant to the first user device to display a first map of the specific geographic area using the first map tile variant, the first displayed map including one or more first text strings in the first language; wherein the method is performed using one or more processors. The method is performed using one or more processors.

At least some aspects of the present disclosure are directed to a system for collaborative using maps. In some examples, the system includes one or more processors, and one or more memories storing instructions that, when executed by the one or more processors, cause the system to perform a set of operations. In some examples, the set of operations include: receiving a first request of a map of a specific geographic area from a first user device; receiving a first language code that corresponds to a first language preferred by a first user associated with the first user device; selecting a first map tile variant from a plurality of map tile variants based on the first language code, each map tile variant of the plurality of map tile variants covering a same geographic area and including one or more respective text strings that are semantically equivalent; and transmitting an indication of the first map tile variant to the first user device to display a first map of the specific geographic area using the first map tile variant, the first displayed map including one or more first text strings in the first language.

At least some aspects of the present disclosure are directed to a non-transitory computer-readable storage medium having instructions for collaborative map use that, when executed by one or more processors, cause the one or more processors to perform operations comprising: receiving a first request of a map of a specific geographic area from a first user device; receiving a first language code that corresponds to a first language preferred by a first user associated with the first user device; selecting a first map tile variant from a plurality of map tile variants based on the first language code, each map tile variant of the plurality of map tile variants covering a same geographic area and including one or more respective text strings that are semantically equivalent; and transmitting an indication of the first map tile variant to the first user device to display a first map of the specific geographic area using the first map tile variant, the first displayed map including one or more first text strings in the first language.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIGS. 1A and 1B is a simplified diagram showing a method for collaboration map use according to certain embodiments of the present disclosure.
FIG. 2 is an illustrative computing environment for collaborative map use according to certain embodiments of the present disclosure.
FIGS. 3A and 3B illustrate examples of representations of map tile variants according to certain embodiments of the present disclosure.
FIGS. 4A and 4B illustrate an example operation according to certain embodiments of the present disclosure.
FIG. 5 includes an example of a data structure used in a map application, according to certain embodiments of the present disclosure.
FIG. 6 is a simplified diagram showing a computing system for implementing a system for collaborations of map tiles in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods often do not provide a way for users speaking different languages or using different preferences (e.g., styles, units, etc.) to collaborate in a map system. For example, a conventional system includes one fixed language for a map (e.g., a raster map, a vector map) to be used by multiple users to collaborate on.

Various embodiments of the present disclosure can achieve benefits and/or improvement over conventional systems by a computing system accessing a family of map tile variants (e.g., raster tile variants in different languages, raster tile variants in different styles, raster tile variants in different user preferences, etc.) and providing to a user a specific map variant. In some embodiments, benefits include allowing automatically selecting a map tile variant that has a specific language or matches one or more user's preferences, to improve efficiency of the computing system. In certain embodiments, benefits include improved efficiency of a computing system for providing the right map tile variant by evaluating a user's preference. For example, the computing system may evaluate a user's web browser configurations and/or preferences. In some embodiments, benefits include improved efficiency in collaboration by automatically incorporating inputs of a first user working on a first map tile variant in a first language into a second map tile variant in a second language used by a second user. Additional and/or alternative benefits should be recognized by those of ordinary skill in the art, at least in light of the teachings provided herein.

According to certain embodiments, a map system (e.g., a computing system running a map application, etc.) accesses, uses, modifies, and/or stores a family of map tile variants. In some embodiments, the map system accesses, uses, modifies, and/or stores a family of map tile variants, where each map tile variant is corresponding to a language, a language code, and/or a style. In certain embodiments, the map system accesses, uses, modifies, and/or stores a family of raster map tile variants, where each map tile variant is corresponding to a language, a language code, and/or a style. In some embodiments, a map tile variant refers to a set of map tiles of a specific parameter (e.g., a language, a language code, a style, a unit, etc.), where the set of map tiles are a part of a map. In certain embodiments, a map tile can be a raster map tile including raster data (e.g., image pixel data). In some embodiments, a map tile can be a vector map tile including vector data. In certain embodiments, a map system accesses, uses, modifies, and/or stores a base layer, which includes one or more raster map tile data layers and/or one or more data layers (e.g., vehicle location data, ship location data, etc.). In some embodiments, the map system generates the base layer by stitching the one or more map data layers and/or one or more data layers using geospatial data (e.g., coordinates, location coordinates, etc.), image registrations, and/or other techniques.

According to some embodiments, maps (e.g., maps to be presented by a software application, maps to be presented by a web application, etc.) often have a base layer including raster (e.g., image) tiles stitched together (e.g., street maps, satellite imagery, etc.) and those tiles often have text labels for features such as cities, countries, landmarks, and terrain features. In certain embodiments, when users who speak and/or use different languages collaborate on a shared map, only one language can be used at a time, and conventional internationalization tools aren't helpful because the text exists as part of the raster tile, not as text available for translation at a user device (e.g., frontend translation). In some embodiments, this is a common problem with multinational businesses and/or international coalitions.

According to some embodiments, a map application (e.g., a software module run on a computing device, a software module run on a server, a client-side software application, a web application, a mobile application, etc.) can leverage user language preferences (e.g., a configuration, web-standard preference, etc.) combined with the web map tile server and customizable configurations to route one or more users to correct raster tile variants. In certain embodiments, the map application provides a correct variant of a tile source in a way that is silent to the user, for example, without requiring a user selection.

According to certain embodiments, the map application can use a plurality of tile sources, which include a family of imagery tile variants that are semantically equivalent (e.g., a dark-background street map, or a visible light imagery mosaic, etc.) but use different languages for the embedded text labels in the raster images. In some embodiments, the map application can use a plurality of tile sources, which include a family of imagery tile variants that are semantically equivalent (e.g., a dark-background street map, or a visible light imagery mosaic, etc.) but use different styles in the raster images. In certain embodiments, the map application can use a plurality of tile sources, which include a family of imagery tile variants that are semantically equivalent (e.g., a dark-background street map, or a visible light imagery mosaic, etc.) but use different languages and/or different styles in the vector images.

According to some embodiments, the map application can map the family of imagery tile variants to a standard (e.g., an industry standard, internationalization standard i18n etc.) and/or other locale language codes and use a client application logic (e.g., frontend logic) to re-map the collaborative map's specified tile source to a locale-appropriate variant for that user.

According to certain embodiments, the map system allows users of several different languages to collaborate such that if one selects a base layer for their map, all will see semantically equivalent, but language-matched versions on their own displays without the need for any end-user configuration or action. In some embodiments, the map system can provide other forms (e.g., styles, units, etc.) of per-user tile remapping. For example, a topographical map might display elevations in feet to American users but in meters to their British coalition partners, while visually appearing to be the same map. In some examples, a unit refers to a unit for a number, a measurement, etc. In certain embodiments, a style refers to one or more visual parameters for a representation, for example, color parameters, shape parameters, etc. In some embodiments, a style refers to one or more visual parameters for a representation of an object (e.g., a vehicle, a traffic sign, a building, etc.). For example, a first map and a second map covering a same geographic area, where the first map includes a first ship symbol representing a first ship and the second ship includes a second ship symbol representing the first ship.

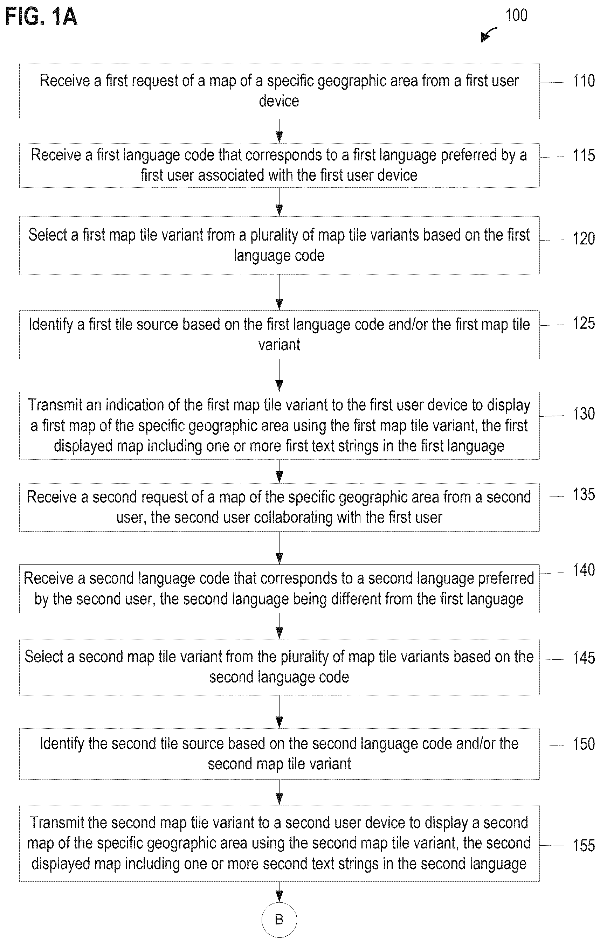

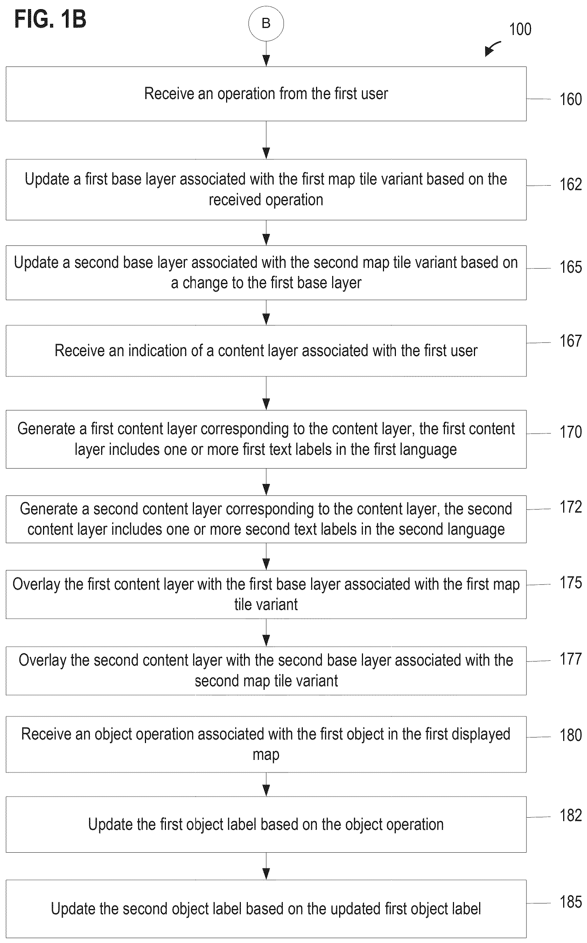

FIGS. 1A and 1B is a simplified diagram showing a method 100 for collaborative map use according to certain embodiments of the present disclosure. This diagram is merely an example. One of ordinary skill in the art would recognize many variations, alternatives, and modifications. The method 100 includes processes 110-185. Although the above has been shown using a selected group of processes for the method 100, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some embodiments, some or all processes (e.g., steps) of the method 100 are performed by a system (e.g., the computing system 600). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 110, the system receives a first request of a map of a specific geographic area from a first user device. In certain embodiments, the first request can include an indication of the specific geographic area. In some examples, the indication of the specific geographic area includes a description (e.g., a country, a city, one or more geographic coordinates, etc.) and/or a graphic representation (e.g., a polygon selection, a rectangular selection, etc.). In certain embodiments, the first request includes a map type (e.g., a raster map, a vector map, etc.). In some embodiments, the first request can include the indication of the specific geography area and/or a content request (e.g., ships in the specific geographic area, animals in the specific geographic area, etc.). In certain examples, the content request includes a description of what content is to be included in the map, a type of object (e.g., a vehicle type, a building, an entity, etc.), and/or the like.

According to certain embodiments, the system allows two or more users with different preferences (e.g., language preference, style preference, unit preference, etc.) to collaborate on maps representing the same area. In some embodiments, the system includes data models capturing the map data and/or the content data. In certain embodiments, the system includes data models capturing the map data and the content data. In some examples, a change to the map or content made by one user will be shown to the other users. For example, a user changes a road sign on a map via a map application (e.g., a software module run on a computing device, a software module run on a server, a client-side software application, a web application, a mobile application, etc.) in the system, and the road sign change will be shown on the map viewed by another user, while the road sign change can be in a different language or style. As an example, a user changes an object on a map via a map application, and the object change will be shown on another map viewed by another user, while the object change can be in a different language or style.

According to some embodiments, at process 115, the system receives a first language code that corresponds to a first language preferred by a first user associated with the first user device. In certain embodiments, the system determines the first language code that corresponds to the first language preferred by the first user by extracting the language code from a configuration (e.g., a web browser configuration, a software application configuration, etc.) associated with the first user. In some embodiments, the system determines the first language code that corresponds to the first language preferred by the first user by extracting the language code from a web browser configuration and/or a web browser preference. In certain embodiments, the first language and/or the first language code is specified by the first user, for example, via the first user device.

According to certain embodiments, at process 120, the system selects a first map tile variant from a plurality of map tile variants based on the first language code. In some embodiments, each map tile variant of the plurality of map tiles covers a same geographic area (e.g., the specific geographic area, etc.) and includes a set of respective text labels that is semantically equivalent to another set of respective text labels of another map tile variant. In certain embodiments, a map tile variant includes a set of map tiles (e.g., a set of raster map tiles, a set of vector map tiles, etc.) collectively covering the specific geographic area. In some embodiments, a map tile variant includes a plurality of map tiles (e.g., a set of raster map tiles, a set of vector map tiles, etc.) collectively covering the specific geographic area. In certain examples, a first map tile variant corresponds to a first language (e.g., Japanese, French, English, Spanish, etc.), and a second map tile variant corresponds to a second language that is different from the first language.

According to some embodiments, a plurality of map tile variants are stored in one or more tile sources. In certain embodiments, a map tile variant corresponds to a base layer of a map. For example, a first map tile variant includes a first set of map tiles covering Japan or an area in Japan or including Japan in Japanese. As an example, a second first map tile variant includes a second set of map tiles covering Japan or an area in Japan or including Japan in English.

According to certain embodiments, at process 125, the system identifies a first tile source based on the first language code and/or the first map tile variant. In some embodiments, the first tile source is hosted at a first physical server or a first virtual server that is different from a second physical server or a second virtual server. In certain embodiments, the first tile source and the second tile source are stored and/or hosted by a same physical server or a virtual server. For example, for a Japanese-locale raster map tile variant, the system identifies a first server. As an example, for an English-locale raster map tile variant, the system identifies a second server different from the first server physically or virtually.

According to some embodiments, at process 130, the system transmits an indication of the first map tile variant to the first user device to display a first map of the specific geographic area using the first map tile variant. In certain embodiments, the first displayed map includes one or more first text strings in the first language that is semantically equivalent to one or more second text labels in a second language.

According to certain embodiments, at process 135, the system receives a second request of a map of the specific geographic area from a second user, where the second user is collaborating with the first user. In some embodiments, additional requests can be received from additional users. According to some embodiments, at process 110, the system receives a second request of a map of a specific geographic area from a second user device. In certain embodiments, the second request can include an indication of the specific geographic area. In some examples, the indication of the specific geographic area includes a description (e.g., a country, a city, one or more geographic coordinates, etc.) and/or a graphic representation (e.g., a polygon selection, a rectangular selection, etc.). In certain embodiments, the second request includes a map type (e.g., a raster map, a vector map, etc.). In some embodiments, the second request can include the indication of the specific geography area and/or a content request (e.g., ships in the specific geographic area, animals in the specific geographic area, etc.). In certain examples, the content request includes a description of what content is to be included in the map, a type of object (e.g., a vehicle type, a building, an entity, etc.), and/or the like.

According to some embodiments, at process 140, the system receives a second language code that corresponds to a second language preferred by a second user associated with the second user device. In certain embodiments, the system determines the second language code that corresponds to the second language preferred by the second user by extracting the language code from a configuration (e.g., a web browser configuration, a software application configuration, etc.) associated with the second user. In some embodiments, the system determines the second language code that corresponds to the second language preferred by the second user by extracting the language code from a web browser configuration and/or a web browser preference. In certain embodiments, the first language and/or the first language code is specified by the first user, for example, via the first user device.

According to certain embodiments, at process 145, the system selects a second map tile variant from a plurality of map tile variants based on the second language code. In some embodiments, each map tile variant of the plurality of map tiles covers a same geographic area (e.g., the specific geographic area, etc.) and includes a set of respective text labels that is semantically equivalent to another set of respective text labels of another map tile variant.

According to certain embodiments, at process 150, the system identifies a second tile source based on the second language code and/or the second map tile variant. In some embodiments, the second tile source is hosted at a second physical server and/or a second virtual server that is different from a second physical server or a second virtual server. In certain embodiments, the second tile source and the second tile source are stored and/or hosted by a same physical server or a virtual server. For example, for a Japanese-locale raster map tile variant, the system identifies a second tile source hosted at a second server. As an example, for an English-locale raster map tile variant, the system identifies a second tile source hosted at a second server different from the second server physically or virtually. In some embodiments, at process 155, the system transmits an indication of the second map tile variant to the second user device to display a second map of the specific geographic area using the second map tile variant. In certain embodiments, the first displayed map includes one or more first text labels in the first language that are semantically equivalent to one or more second text labels in a second language. In some embodiments, the first text labels are embedded into one or more raster tiles for the first displayed map.

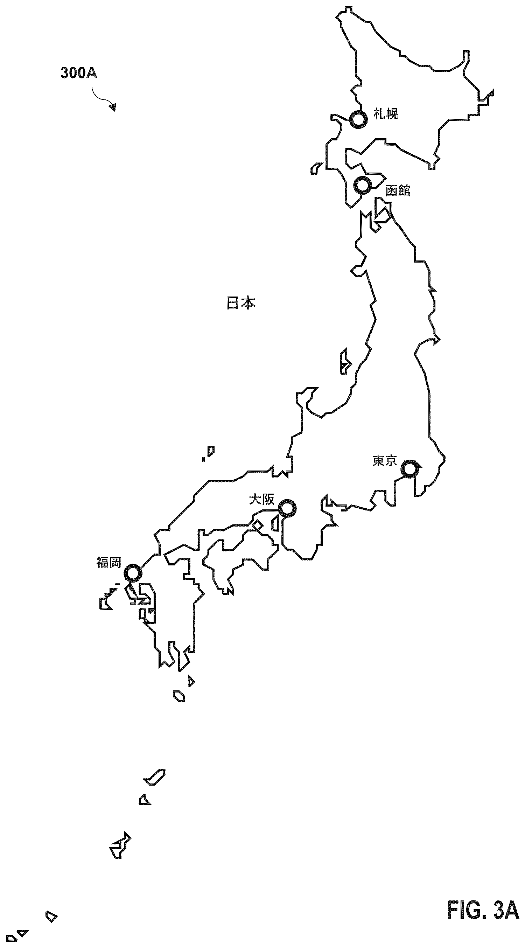

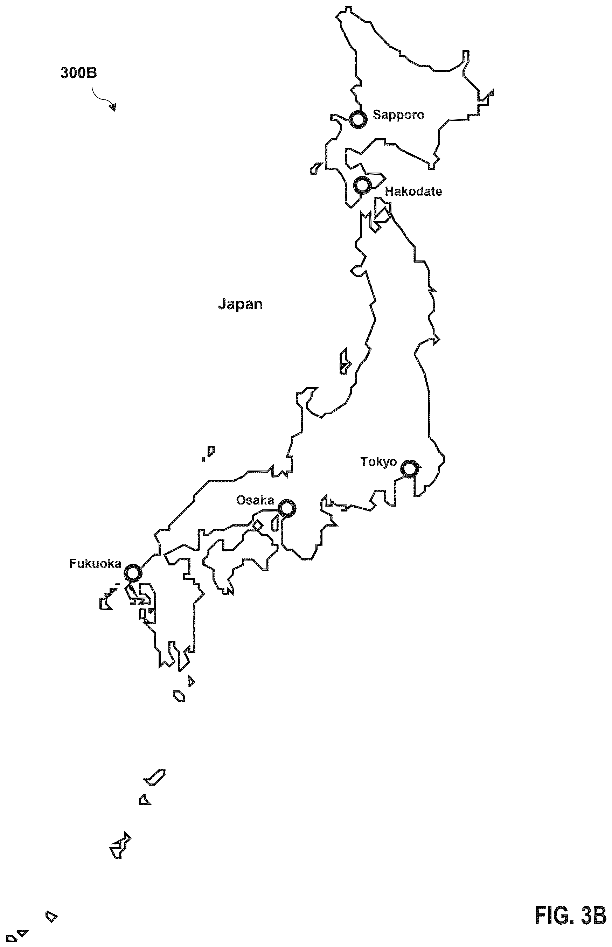

According to some embodiments, the system provides the map application allowing three or more users to collaborate using the map application. In certain embodiments, the system provides the map application allowing three or more users to collaborate on maps of three or more languages using the map application. In some embodiments, the system provides the map application allowing three or more users to collaborate on maps of three or more preferences using the map application. FIGS. 3A and 3B illustrate examples of representations of map tile variants according to certain embodiments of the present disclosure. In this example, FIG. 3A is an example of a first displayed map 300A in a first language (e.g., Japanese). In this example, FIG. 3B is an example of a second displayed map 300B in a second language (e.g., English) different from the first language. In some examples, the first map tile variant includes a first set of map tiles having text strings (e.g., text labels) in the first language. In certain examples, the second tile variant includes a second set of map tiles having text strings in the second language. In some examples, the text strings are integrated into the map tiles.

According to some embodiments, the system uses a map application (e.g., a software module run on a computing device, a software module run on a server, a client-side software application, a web application, a mobile application, etc.) that can leverage user language preferences (e.g., a configuration, web-standard preference, etc.) combined with the web map tile server and customizable configurations to route one or more users to correct raster tile variants. In certain embodiments, the map application provides a correct variant of a tile source in a way that is silent to the user, for example, without requiring a user selection.

According to certain embodiments, the map application can use a plurality of tile sources, which include a family of imagery tile variants that are semantically equivalent (e.g., a dark-background street map, or a visible light imagery mosaic, etc.) but use different languages for the embedded text labels in the raster images. In some embodiments, the map application can use a plurality of tile sources, which include a family of imagery tile variants that are semantically equivalent (e.g., a dark-background street map, or a visible light imagery mosaic, etc.) but use different styles in the raster images. In certain embodiments, the map application can use a plurality of tile sources, which include a family of imagery tile variants that are semantically equivalent (e.g., a dark-background street map, or a visible light imagery mosaic, etc.) but use different languages and/or different styles in the vector images.

According to some embodiments, the system (e.g., using the map application) can map the family of imagery tile variants to a standard (e.g., an industry standard, internationalization standard i18n etc.) and/or other locale language codes and use a client application logic (e.g., frontend logic) to re-map the collaborative map's specified tile source to a locale-appropriate variant for that user.

According to certain embodiments, the system allows users of several different languages to collaborate such that if one selects a base layer for their map, all will see semantically equivalent but language-matched versions on their own displays without the need for any end-user configuration or action. In some embodiments, the map system can provide other forms (e.g., styles, units, etc.) of per-user tile remapping. For example, a topographical map might display elevations in feet to American users but in meters to their British coalition partners, while visually appearing to be the same map. In some examples, a unit refers to a unit for a number, a measurement, etc. In certain embodiments, a style refers to one or more visual parameters for a representation, for example, color parameters, shape parameters, etc. In some embodiments, a style refers to one or more visual parameters for a representation of an object (e.g., a vehicle, a traffic sign, a building, etc.). For example, a first map and a second map covering a same geographic area, where the first map includes a first ship symbol representing a first ship and the second ship includes a second ship symbol representing the first ship.

According to certain embodiments, at process 160, the system receives an operation from the first user and/or from the first user device. In some examples, an operation includes a change, an addition, and/or a deletion associated with an object. In some embodiments, the system determines that the operation is associated with the base layer, also referred to as the base layer of the map tile variant (e.g., map tiles integrated with text strings, etc.). In certain embodiments, in response to determining that the operation is associated with the base layer, at process 162, the system updates a first base layer associated with the first map tile variant based on the received operation. In some embodiments, the update to the first base layer is a change to the first base layer (e.g., a change of a traffic sign, an addition of a traffic sign, a deletion of a traffic sign, a change to a building, an addition of a building, a deletion of a building, a change to a road work, an addition of a road work, a deletion of a road work, etc.).

According to some embodiments, at process 165, the system updates a second base layer associated with the second map tile variant based on a change to the first base layer, where the first base layer is different from the second base layer. For example, the system modifies, adds, and/or deletes a map component corresponding to a respective language and/or a respective preference.

According to certain embodiments, at process 167, the system receives an indication of a content layer (e.g., ship locations and/or information in the content layer, vehicle locations and/or information in the content layer, airplane (e.g., unmanned airplane, etc.) locations and/or information in the content layer, animal locations and/or information in the content layer, object content layer, etc.) associated with the first user. In some examples, the content layer includes content data that is associated with objects, for example, descriptions, locations, properties, and/or the like. In certain examples, the content layer includes dynamic content data that is changing over time. In some embodiments, the indication of the content layer is included in the first request. In certain embodiments, the system receives an indication of a content layer associated with the second user and/or one or more other users. In some embodiments, the indication of the content layer is included in the second request and/or one or more other requests.

According to some embodiments, at process 170, the system generates a first content layer corresponding to the content layer. In certain embodiments, the first content layer includes one or more first text labels in the first language. In some embodiments, the first content layer includes data of one or more objects in a first style parameter. In some embodiments, the system retrieves the first content layer based at least in part on the indication of the content layer. In certain embodiments, at process 172, the system generates a second content layer corresponding to the content layer. In some embodiments, the second content layer includes one or more second text labels in the second language. In certain embodiments, the second content layer includes one or more second text labels in the second language. In some embodiments, the second content layer includes data of one or more objects in a second style parameter. In some embodiments, the system retrieves the second content layer based at least in part on the indication of the content layer. In some embodiments, the one or more first text labels are semantically equivalent to the one or more second text labels. In certain embodiments, the first content layer includes a first style that is semantically equivalent to a second style included in the second content style.

According to certain embodiments, at process 175, the system overlays the first content layer with the first base layer associated with the first map tile variant. In some embodiments, the system overlays the first content layer with the first base layer based on and/or using one or more geographic coordinates of one or more objects in the first content layer. In certain embodiments, the system overlays the first content layer with the first base layer based on and/or using one or more geographic locations specified in the first content layer. In some embodiments, the system overlays the first content layer with the first base layer based on and/or using one or more geographic locations associated with one or more objects in the first content layer.

According to some embodiments, at process 177, the system overlays the second content layer with the second base layer associated with the second map tile variant. In certain embodiments, the system overlays the first content layer with the second base layer associated with the second map tile variant. In some embodiments, the system overlays the first content layer and/or the second content layer with the second base layer based on and/or using one or more geographic coordinates of one or more objects in the first content layer and/or the second content layer. In certain embodiments, the system overlays the first content layer and/or the second content layer with the second base layer based on and/or using one or more geographic locations specified in the first content layer and/or the second content layer. In some embodiments, the system overlays the first content layer and/or the second content layer with the second base layer based on and/or using one or more geographic locations associated with one or more objects in the first content layer and/or the second content layer.

According to certain embodiments, the first content layer is associated with the first language and the second content layer is associated with the second language different from the first language. In some embodiments, the first content layer is associated with the first user preference (e.g., style, color, etc.) and the second content layer is associated with the second user preference different from the first user preference. In certain embodiments, the first content layer is associated with the first user style (e.g., color, shape, etc.) and the second content layer is associated with the second user style that is different from the first user style. For example, a content layer includes ship information in the specific geographic area and/or globally. As an example, a content layer includes vehicle information in the specific geographic area and/or globally. For example, a content layer includes dynamic object information in the specific geographic area and/or globally.

According to some embodiments, the content layer includes data of one or more objects and an object label associated with at least one of the one or more objects. In certain embodiments, the object label includes a text label. In some embodiments, the content layer includes location data of the one or more objects and/or other data of the one or more objects.

According to certain embodiments, at process 180, the system receives an object operation (e.g., an operation associated with an object, etc.) associated with the first object presented in the first displayed map. In some embodiments, the object operation includes a change of the text label associated with the object, an addition of a text label associated with the object, a deletion of the text label associated with the object, a move of the geographic location of the object, an addition of the object, a modification of the object, a deletion of the object, and/or the like. In some examples, the first displayed map includes a first representation of the at least one of the one or more objects and a first object label in the first language that is semantically equivalent to the object label. In certain examples, the second displayed map includes a second representation of the at least one of the one or more objects and a second object label in the second language that is semantically equivalent to the object label.

According to some embodiments, at process 182, the system updates the first object label in the first displayed map based on the object operation. In certain embodiments, at process 185, the system updates the second object label in the second displayed map based on the updated first object label. In some embodiments, updating the second object label includes translating the first object label, where the first object label is in the first language and the second object label is in the second language that is different from the first language.

According to certain embodiments, the system uses envelope security where a plurality of collaborating users can access the same scope of the base layer (e.g., map tile layer, etc.) and the content layer. In some embodiments, the system identifies a first access right associated with the first user. In certain embodiments, the system identifies a second access right associated with the second user. In some embodiments, the system generates the first map tile variant based on the first access right and the second access right. In certain examples, the first access right allows access to a specific data, while the second access right does not allow access to the specific data, and the first map tile variant does not include the specific data. In some examples, the first access right does not allow access to a second specific data, while the second access right allows access to the second specific data, and the first map tile variant does not include the second specific data. In certain examples, the first access right allows access to a third specific data, while the second access right also allows access to the third specific data, and the first map tile variant includes the third specific data.

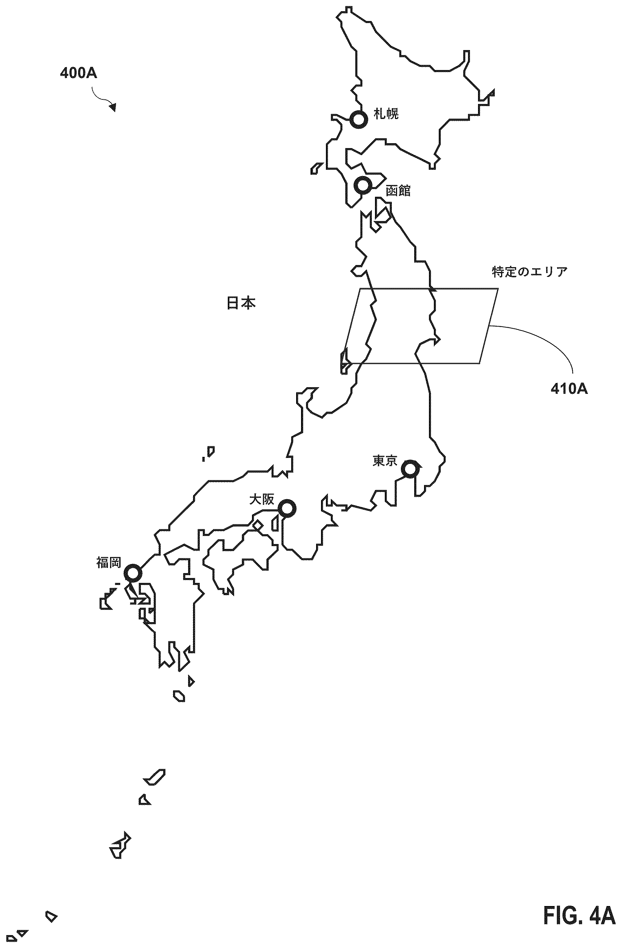

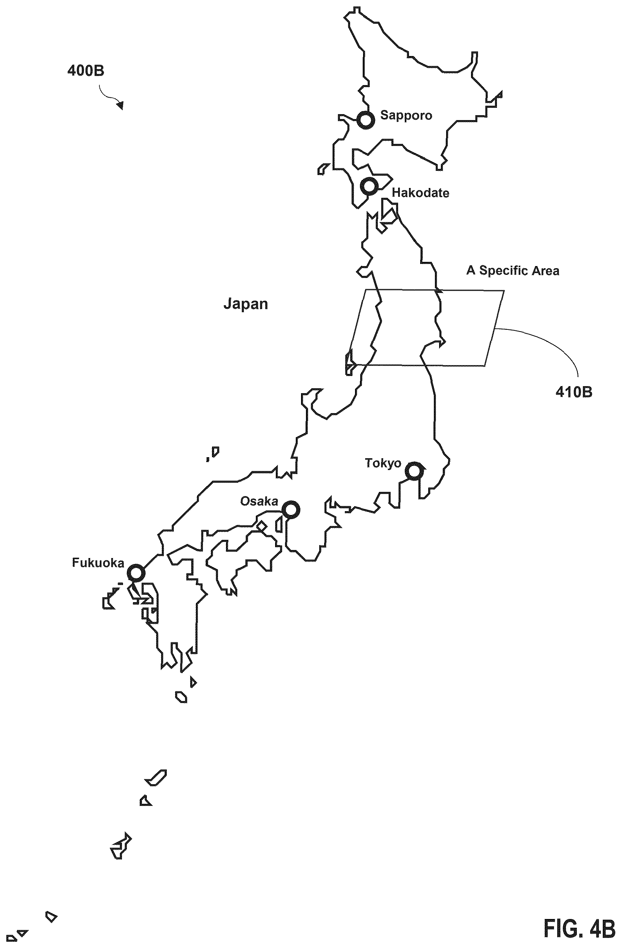

FIGS. 4A and 4B illustrate an example operation 400 according to certain embodiments of the present disclosure. In some examples, the operation can include an object operation. As illustrated in the example in FIG. 4A, the first user specifies an operation 410A associated with an area having a first label. In some embodiments, as illustrated in FIG. 4B, the system creates a corresponding operation 410B associated with the same area having a second label that is different from the first label. In certain embodiments, the first label and the second label are different in language and/or style. In some embodiments, two or more labels are presented in corresponding maps by the map application, where each label of the two or more labels is in a different language and/or style.

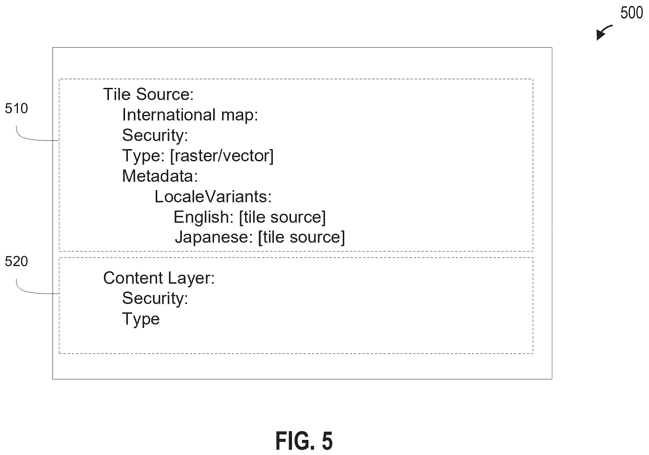

Referring back to FIG. 1, in certain embodiments, the system can translate text strings, text labels, and/or object labels via a translation software and/or a translation software module. FIG. 5 includes an example of a data structure 500 used in a map application, according to certain embodiments of the present disclosure. In some examples, the data structure 500 includes a tile source data structure 510 that provides the tile source information. In certain examples, the data structure 500 includes a content layer (e.g., an annotation layer, a boat information layer, a vehicle information layer, an object information layer, etc.) data structure 520. In some examples, the content layer includes one or more of an annotation layer, a boat information layer, a vehicle information layer, an object information layer, and/or the like. In some embodiments, the system uses the data structure 500 in the map application.

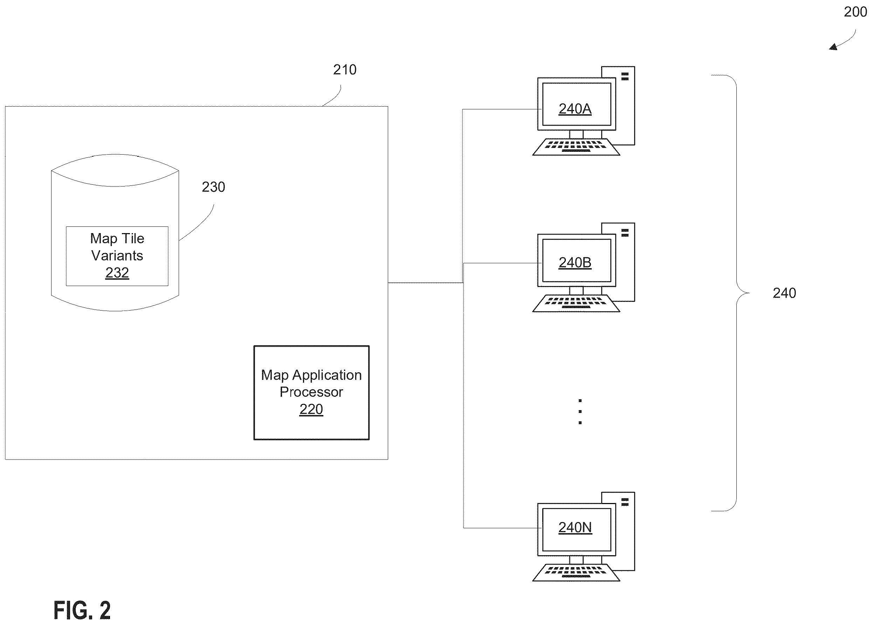

FIG. 2 is an illustrative computing environment 200 for collaborative map use according to certain embodiments of the present disclosure. FIG. 2 is merely an example. One of ordinary skill in the art would recognize many variations, alternatives, and modifications. In some embodiments, the computing environment 200 includes one or more map application systems 210 and one or more computing devices 240 (e.g., a user device 240A, a user device 240B, ... a user device 240N, etc.). In certain embodiments, the map application system 210 includes one or more map application processor 220 and one or more data repositories 230.

In some embodiments, one or more data repositories 230 include one or more map tile variants 232; for example, a map tile variant includes one or more specific language labels. In certain embodiments, the computing device 240 may include and/or access at least a part of the functionality of the map application system 210. Although the above has been shown using a selected group of components in the computing environment 200, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the map application system 210 and/or the map application processor 220 receives a first request of a map of a specific geographic area from a user device 240A. In certain embodiments, the first request can include an indication of the specific geographic area. In some examples, the indication of the specific geographic area includes a description (e.g., a country, a city, one or more geographic coordinates, etc.) and/or a graphic representation (e.g., a polygon selection, a rectangular selection, etc.). In certain embodiments, the first request includes a map type (e.g., a raster map, a vector map, etc.). In some embodiments, the first request can include the indication of the specific geography area and/or a content request (e.g., ships in the specific geographic area, animals in the specific geographic area, etc.). In certain examples, the content request includes a description of what content is to be included in the map, a type of object (e.g., a vehicle type, a building, an entity, etc.), and/or the like.

According to certain embodiments, the map application system 210 and/or the map application processor 220 allows two or more users with different preferences (e.g., language preference, style preference, etc.) to collaborate on maps representing the same area. In some embodiments, the map application system 210 and/or the map application processor 220 includes data models capturing the map data and/or the content data. In certain embodiments, the map application system 210 and/or the map application processor 220 includes data models capturing the map data and the content data. In some examples, a change to the map or content made by one user will be shown to the other users. For example, a user changes a road sign on a map via a map application (e.g., a software module run on a computing device, a software module run on a server, a client-side software application, a web application, a mobile application, etc.), and the road sign change will be shown on the map viewed by another user, while the road sign change can be in a different language or style. As an example, a user changes an object on a map via a map application, and the object change will be shown on another map viewed by another user, while the object change can be in a different language or style.

According to some embodiments, the map application system 210 and/or the map application processor 220 receives a first language code that corresponds to a first language preferred by a first user associated with the user device 240A. In certain embodiments, the map application system 210 and/or the map application processor 220 determines the first language code that corresponds to the first language preferred by the first user by extracting the language code from a configuration (e.g., a web browser configuration, a software application configuration, etc.) associated with the first user. In some embodiments, the map application system 210 and/or the map application processor 220 determines the first language code that corresponds to the first language preferred by the first user by extracting the language code from a web browser configuration and/or a web browser preference. In certain embodiments, the first language and/or the first language code is specified by the first user, for example, via the user device 240A.

According to certain embodiments, the map application system 210 and/or the map application processor 220 selects a first map tile variant from a plurality of map tile variants based on the first language code. In some embodiments, each map tile variant of the plurality of map tiles covers a same geographic area (e.g., the specific geographic area, etc.) and includes a set of respective text labels that is semantically equivalent to another set of respective text labels of another map tile variant. In certain embodiments, a map tile variant includes a set of map tiles (e.g., a set of raster map tiles, a set of vector map tiles, etc.) collectively covering the specific geographic area. In some embodiments, a map tile variant includes a plurality of map tiles (e.g., a set of raster map tiles, a set of vector map tiles, etc.) collectively covering the specific geographic area. In certain examples, a first map tile variant corresponds to a first language (e.g., Japanese, French, English, Spanish, etc.), and a second map tile variant corresponds to a second language that is different from the first language.

According to some embodiments, a plurality of map tile variants are stored in one or more tile sources. In certain embodiments, a map tile variant corresponds to a base layer of a map. For example, a first map tile variant includes a first set of map tiles covering Japan or an area in Japan or including Japan in Japanese. As an example, a second first map tile variant includes a second set of map tiles covering Japan or an area in Japan or including Japan in English.

According to certain embodiments, the map application system 210 and/or the map application processor 220 identifies a first tile source based on the first language code and/or the first map tile variant. In some embodiments, the first tile source is hosted at a first physical server or a first virtual server that is different from a second physical server or a second virtual server. In certain embodiments, the first tile source and the second tile source are stored and/or hosted by a same physical server or a virtual server. For example, for a Japanese-locale raster map tile variant, the map application system 210 and/or the map application processor 220 identifies a first server. As an example, for an English-locale raster map tile variant, the map application system 210 and/or the map application processor 220 identifies a second server different from the first server physically or virtually.

According to some embodiments, the map application system 210 and/or the map application processor 220 transmits an indication of the first map tile variant to the user device 240A to display a first map of the specific geographic area using the first map tile variant. In certain embodiments, the first displayed map includes one or more first text labels in the first language that is semantically equivalent to one or more second text labels in a second language.

According to certain embodiments, the map application system 210 and/or the map application processor 220 receives a second request of a map of the specific geographic area from a second user, where the second user is collaborating with the second user. In some embodiments, additional requests can be received from additional users. According to some embodiments, at process 110, the map application system 210 and/or the map application processor 220 receives a second request of a map of a specific geographic area from a user device 240B. In certain embodiments, the second request can include an indication of the specific geographic area. In some examples, the indication of the specific geographic area includes a description (e.g., a country, a city, one or more geographic coordinates, etc.) and/or a graphic representation (e.g., a polygon selection, a rectangular selection, etc.). In certain embodiments, the second request includes a map type (e.g., a raster map, a vector map, etc.). In some embodiments, the second request can include the indication of the specific geography area and/or a content request (e.g., ships in the specific geographic area, animals in the specific geographic area, etc.). In certain examples, the content request includes a description of what content is to be included in the map, a type of object (e.g., a vehicle type, a building, an entity, etc.), and/or the like.

According to some embodiments, the map application system 210 and/or the map application processor 220 receives a second language code that corresponds to a second language preferred by a second user associated with the user device 240B. In certain embodiments, the map application system 210 and/or the map application processor 220 determines the second language code that corresponds to the second language preferred by the second user by extracting the language code from a configuration (e.g., a web browser configuration, a software application configuration, etc.) associated with the second user. In some embodiments, the map application system 210 and/or the map application processor 220 determines the second language code that corresponds to the second language preferred by the second user by extracting the language code from a web browser configuration and/or a web browser preference. In certain embodiments, the first language and/or the first language code is specified by the first user, for example, via the user device 240A.

According to certain embodiments, the map application system 210 and/or the map application processor 220 selects a second map tile variant from a plurality of map tile variants based on the second language code. In some embodiments, each map tile variant of the plurality of map tiles covers a same geographic area (e.g., the specific geographic area, etc.) and includes a set of respective text labels that is semantically equivalent to another set of respective text labels of another map tile variant.

According to certain embodiments, the map application system 210 and/or the map application processor 220 identifies a second tile source based on the second language code and/or the second map tile variant. In some embodiments, the second tile source is hosted at a second physical server and/or a second virtual server that is different from a second physical server or a second virtual server. In certain embodiments, the second tile source and the second tile source are stored and/or hosted by a same physical server or a virtual server. For example, for a Japanese-locale raster map tile variant, the map application system 210 and/or the map application processor 220 identifies a second tile source hosted at a second server. As an example, for an English-locale raster map tile variant, the map application system 210 and/or the map application processor 220 identifies a second tile source hosted at a second server different from the second server physically or virtually. In some embodiments, the map application system 210 and/or the map application processor 220 transmits an indication of the second map tile variant to the user device 240B to display a second map of the specific geographic area using the second map tile variant. In certain embodiments, the first displayed map includes one or more first text labels in the first language that are semantically equivalent to one or more second text labels in a second language.

According to some embodiments, the map application system 210 and/or the map application processor 220 provides the map application allowing three or more users to collaborate using the map application. In certain embodiments, the map application system 210 and/or the map application processor 220 provides the map application allowing three or more users to collaborate on maps of three or more languages using the map application. In some embodiments, the map application system 210 and/or the map application processor 220 provides the map application allowing three or more users to collaborate on maps of three or more preferences using the map application. FIGS. 3A and 3B illustrate examples of representations of map tile variants according to certain embodiments of the present disclosure. In this example, FIG. 3A is an example of a first displayed map 300A in a first language (e.g., Japanese). In this example, FIG. 3B is an example of a second displayed map 300B in a second language (e.g., English) different from the first language. In some examples, the first map tile variant includes a first set of map tiles having text strings (e.g., text labels) in the first language. In certain examples, the second tile variant includes a second set of map tiles having text strings in the second language. In some examples, the text strings are integrated into the map tiles.

According to certain embodiments, the map application system 210 and/or the map application processor 220 accesses, uses, modifies, and/or stores a family of map tile variants. In some embodiments, the map application system 210 and/or the map application processor 220 accesses, uses, modifies, and/or stores a family of map tile variants, where each map tile variant is corresponding to a language, a language code, and/or a style. In certain embodiments, the map application system 210 and/or the map application processor 220 accesses, uses, modifies, and/or stores a family of raster map tile variants, where each map tile variant is corresponding to a language, a language code, and/or a style. In some embodiments, a map tile variant refers to a set of map tiles of a specific parameter (e.g., a language, a language code, a style, a unit, etc.), where the set of map tiles are a part of a map. In certain embodiments, a map tile can be a raster map tile including raster data (e.g., image pixel data). For example, a style can be a style for one or more color blind users. In some embodiments, a map tile can be a vector map tile including vector data. In certain embodiments, the map application system 210 and/or the map application processor 220 accesses, uses, modifies, and/or stores a base layer that includes one or more raster map tile data layers and/or one or more data layers (e.g., vehicle location data, ship location data, etc.). In some embodiments, the map system generates the base layer by stitching the one or more map data layers and/or one or more data layers using geospatial data (e.g., coordinates, location coordinates, etc.), image registrations, and/or other techniques.

According to some embodiments, map data (e.g., maps to be presented by a software application, maps to be presented by a web application, etc.) often have a base layer comprising raster (i.e., image) tiles stitched together (e.g., street maps, satellite imagery, etc.) and those tiles often have text labels for features such as cities, countries, landmarks, and terrain features. In certain embodiments, when users who speak and/or use different languages collaborate on a shared map only one language can be used at a time, and conventional internationalization tools aren't helpful because the text exists as part of the raster tile not as text available for translation at a user device (e.g., frontend translation). In some embodiments, this is a common problem with multinational businesses and/or international coalitions.

According to some embodiments, the map application system 210 and/or the map application processor 220 uses a map application (e.g., a software module run on a computing device, a software module run on a server, a client-side software application, a web application, a mobile application, etc.) that can leverage user language preferences (e.g., a configuration, web-standard preference, etc.) combined with the web map tile server and customizable configurations to route one or more users to correct raster tile variants. In certain embodiments, the map application provides a correct variant of a tile source in a way that is silent to the user, for example, without requiring a user selection.

According to certain embodiments, the map application can use a plurality of tile sources, which include a family of imagery tile variants that are semantically equivalent (e.g., a dark-background street map, or a visible light imagery mosaic, etc.) but use different languages for the embedded text labels in the raster images. In some embodiments, the map application can use a plurality of tile sources, which include a family of imagery tile variants that are semantically equivalent (e.g., a dark-background street map, or a visible light imagery mosaic, etc.) but use different styles in the raster images. In certain embodiments, the map application can use a plurality of tile sources, which include a family of imagery tile variants that are semantically equivalent (e.g., a dark-background street map, or a visible light imagery mosaic, etc.) but use different languages and/or different styles in the vector images.

According to some embodiments, the map application can map the family of imagery tile variants to a standard (e.g., an industry standard, internationalization standard i18n etc.) and/or other locale language codes and use a client application logic (e.g., frontend logic) to re-map the collaborative map's specified tile source to a locale-appropriate variant for that user.

According to certain embodiments, the map application system 210 and/or the map application processor 220 allows users of several different languages to collaborate such that if one selects a base layer for their map, all will see semantically equivalent but language-matched versions on their own displays without the need for any end-user configuration or action. In some embodiments, the map system can provide other forms (e.g., styles, units, etc.) of per-user tile remapping. For example, a topographical map might display elevations in feet to American users but in meters to their British coalition partners, while visually appearing to be the same map. In some examples, a unit refers to a unit for a number, a measurement, etc. In certain embodiments, a style refers to one or more visual parameters for a representation, for example, color parameters, shape parameters, etc. In some embodiments, a style refers to one or more visual parameters for a representation of an object (e.g., a vehicle, a traffic sign, a building, etc.). For example, a first map and a second map covering a same geographic area, where the first map includes a first ship symbol representing a first ship and the second ship includes a second ship symbol representing the first ship.

According to certain embodiments, the map application system 210 and/or the map application processor 220 receives an operation from the first user and/or from the user device 240A. In some examples, an operation includes a change, an addition, and/or a deletion associated with an object. In some embodiments, the map application system 210 and/or the map application processor 220 determines that the operation is associated with the base layer, also referred to as the base layer of the map tile variant (e.g., map tiles integrated with text strings, etc.). In certain embodiments, in response to determining that the operation is associated with the base layer, the map application system 210 and/or the map application processor 220 updates a first base layer associated with the first map tile variant based on the received operation. In some embodiments, the update to the first base layer is a change to the first base layer (e.g., a change of a traffic sign, an addition of a traffic sign, a deletion of a traffic sign, a change to a building, an addition of a building, a deletion of a building, a change to a road work, an addition of a road work, a deletion of a road work, etc.).

According to some embodiments, the map application system 210 and/or the map application processor 220 updates a second base layer associated with the second map tile variant based on a change to the first base layer, where the first base layer is different from the second base layer. For example, the map application system 210 and/or the map application processor 220 modifies, adds, and/or deletes a map component corresponding to a respective language and/or a respective preference.

According to certain embodiments, the map application system 210 and/or the map application processor 220 receives an indication of a content layer (e.g., ship locations and/or information in the content layer, vehicle locations and/or information in the content layer, airplane (e.g., unmanned airplane, etc.) locations and/or information in the content layer, animal locations and/or information in the content layer, etc.) associated with the first user. In some examples, the content layer includes content data that is associated with objects, for example, descriptions, locations, properties, and/or the like. In certain examples, the content layer includes dynamic content data that is changing over time. In some embodiments, the indication of the content layer is included in the first request. In certain embodiments, the map application system 210 and/or the map application processor 220 receives an indication of a content layer associated with the second user and/or one or more other users. In some embodiments, the indication of the content layer is included in the second request and/or one or more other requests.

According to some embodiments, the map application system 210 and/or the map application processor 220 generates a first content layer corresponding to the content layer, where the first content layer includes one or more first text labels in the first language. In certain embodiments, the first content layer includes one or more first text labels in the first language. In some embodiments, the first content layer includes data of one or more objects in a first style parameter. In some embodiments, the map application system 210 and/or the map application processor 220 retrieves the first content layer based at least in part on the indication of the content layer. In certain embodiments, the map application system 210 and/or the map application processor 220 generates a second content layer corresponding to the content layer. In some embodiments, the second content layer includes one or more second text labels in the second language. In certain embodiments, the second content layer includes one or more second text labels in the second language. In some embodiments, the second content layer includes data of one or more objects in a second style parameter. In some embodiments, the system retrieves the second content layer based at least in part on the indication of the content layer. In some embodiments, the one or more first text labels are semantically equivalent to the one or more second text labels. In certain embodiments, the first content layer includes a first style that is semantically equivalent to a second style included in the second content style.

According to certain embodiments, the map application system 210 and/or the map application processor 220 overlays the first content layer with the first base layer associated with the first map tile variant. In some embodiments, the map application system 210 and/or the map application processor 220 overlays the first content layer with the first base layer based on and/or using one or more geographic coordinates of one or more objects in the first content layer. In certain embodiments, the map application system 210 and/or the map application processor 220 overlays the first content layer with the first base layer based on and/or using one or more geographic locations specified in the first content layer. In some embodiments, the map application system 210 and/or the map application processor 220 overlays the first content layer with the first base layer based on and/or using one or more geographic locations associated with one or more objects in the first content layer.

According to some embodiments, the map application system 210 and/or the map application processor 220 overlays the second content layer with the second base layer associated with the second map tile variant. In certain embodiments, the map application system 210 and/or the map application processor 220 overlays the first content layer with the second base layer associated with the second map tile variant. In some embodiments, the map application system 210 and/or the map application processor 220 overlays the first content layer and/or the second content layer with the second base layer based on and/or using one or more geographic coordinates of one or more objects in the first content layer and/or the second content layer. In certain embodiments, the map application system 210 and/or the map application processor 220 overlays the first content layer and/or the second content layer with the second base layer based on and/or using one or more geographic locations specified in the first content layer and/or the second content layer. In some embodiments, the map application system 210 and/or the map application processor 220 overlays the first content layer and/or the second content layer with the second base layer based on and/or using one or more geographic locations associated with one or more objects in the first content layer and/or the second content layer.

According to certain embodiments, the first content layer is associated with the first language and the second content layer is associated with the second language different from the first language. In some embodiments, the first content layer is associated with the first user preference (e.g., style, color, etc.) and the second content layer is associated with the second user preference different from the first user preference. In certain embodiments, the first content layer is associated with the first user style (e.g., color, shape, etc.) and the second content layer is associated with the second user style different from the first user preference. For example, a content layer includes ship information in the specific geographic area and/or globally. As an example, a content layer includes vehicle information in the specific geographic area and/or globally. For example, a content layer includes dynamic object information in the specific geographic area and/or globally.

According to some embodiments, the content layer includes data of one or more objects and an object label associated with at least one of the one or more objects. In certain embodiments, the object label includes a text label. In some embodiments, the content layer includes location data of the one or more objects and/or other data of the one or more objects.

According to certain embodiments, the map application system 210 and/or the map application processor 220 receives an object operation (e.g., an operation associated with an object, etc.) associated with the first object presented in the first displayed map. In some embodiments, the object operation includes a change of the text label associated with the object, an addition of a text label associated with the object, a deletion of the text label associated with the object, a move of the geographic location of the object, an addition of the object, a modification of the object, a deletion of the object, and/or the like. In some examples, the first displayed map includes a first representation of the at least one of the one or more objects and a first object label in the first language that is semantically equivalent to the object label. In certain examples, the second displayed map includes a second representation of the at least one of the one or more objects and a second object label in the second language that is semantically equivalent to the object label.

According to some embodiments, the map application system 210 and/or the map application processor 220 updates the first object label in the first displayed map based on the object operation. In certain embodiments, the map application system 210 and/or the map application processor 220 updates the second object label in the second displayed map based on the updated first object label. In some embodiments, updating the second object label includes translating the first object label where the first object label is in the first language and the second object label is in the second language that is different from the first language.

According to certain embodiments, the map application system 210 and/or the map application processor 220 uses envelope security where a plurality of collaborating users can access the same scope of the base layer (e.g., map tile layer, etc.) and the content layer. In some embodiments, the map application system 210 and/or the map application processor 220 identifies a first access right associated with the first user. In certain embodiments, the map application system 210 and/or the map application processor 220 identifies a second access right associated with the second user. In some embodiments, the map application system 210 and/or the map application processor 220 generates the first map tile variant based on the first access right and the second access right. In certain examples, the first access right allows access to a specific data, while the second access right does not allow access to the specific data, and the first map tile variant does not include the specific data. In some examples, the first access right does not allow access to a second specific data, while the second access right allows access to the second specific data, and the first map tile variant does not include the second specific data. In certain examples, the first access right allows access to a third specific data, while the second access right also allows access to the third specific data, and the first map tile variant includes the third specific data.

FIGS. 4A and 4B illustrate an example operation 400 according to certain embodiments of the present disclosure. In some examples, the operation can include an object operation. As illustrated in the example in FIG. 4A, the first user specifies an operation 410A associated with an area having a first label. In some embodiments, as illustrated in FIG. 4B, the map application system 210 and/or the map application processor 220 creates a corresponding operation 410B associated with the same area having a second label that is different from the first label. In certain embodiments, the first label and the second label are different in language and/or style. In some embodiments, two or more labels are presented in corresponding maps by the map application, where each label of the two or more labels is in a different language and/or style.

Referring back to FIG. 2, in certain embodiments, the map application system 210 and/or the map application processor 220 can translate text strings, text labels, and/or object labels via a translation software and/or a translation software module. FIG. 5 includes an example of a data structure 500 used in a map application, according to certain embodiments of the present disclosure. In some examples, the data structure 500 includes a tile source data structure 510 that provides the tile source information. In certain examples, the data structure 500 includes a content layer data structure 520. In some examples, the content layer includes one or more of an annotation layer, a boat information layer, a vehicle information layer, an object information layer, and/or the like. In some embodiments, the map application system 210 and/or the map application processor 220 uses the data structure 500 in the map application.

In some embodiments, the one or more data repositories 230 can include one or more map tile variants (e.g., one or more base layers), one or more content layers, user preferences, styles, user selections, languages and/or language codes, user operations, object operations, and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by a data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central. In some cases, various components in the computing environment 200 can execute software or firmware stored in a non-transitory computer-readable medium to implement various processing steps. Various components and processors of the computing environment 200 can be implemented by one or more computing devices including, but not limited to, circuits, a computer, a cloud-based processing unit, a processor, a processing unit, a microprocessor, a mobile computing device, and/or a tablet computer. In some cases, various components referenced by the computing environment 200 (e.g., the one or more map application systems 210, the one or more map application processor 220, the one or more computing devices 240, etc.) can be implemented on a shared computing device. Alternatively, a component of the computing environment 200 can be implemented on multiple computing devices. In some implementations, various modules and components referenced by the computing environment 200 can be implemented as software, hardware, firmware, or a combination thereof. In some cases, various components referenced by the computing environment 200 can be implemented in software or firmware executed by a computing device.

Various components referenced by the computing environment 200 can communicate via or be coupled to via a communication interface, for example, a wired or wireless interface. The communication interface includes, but is not limited to, any wired or wireless short-range and long-range communication interfaces. The short-range communication interfaces may be, for example, a local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, a wide area network (WAN), cellular network interfaces, satellite communication interfaces, etc. The communication interface may be either within a private computer network, such as an intranet, or on a public computer network, such as the Internet.

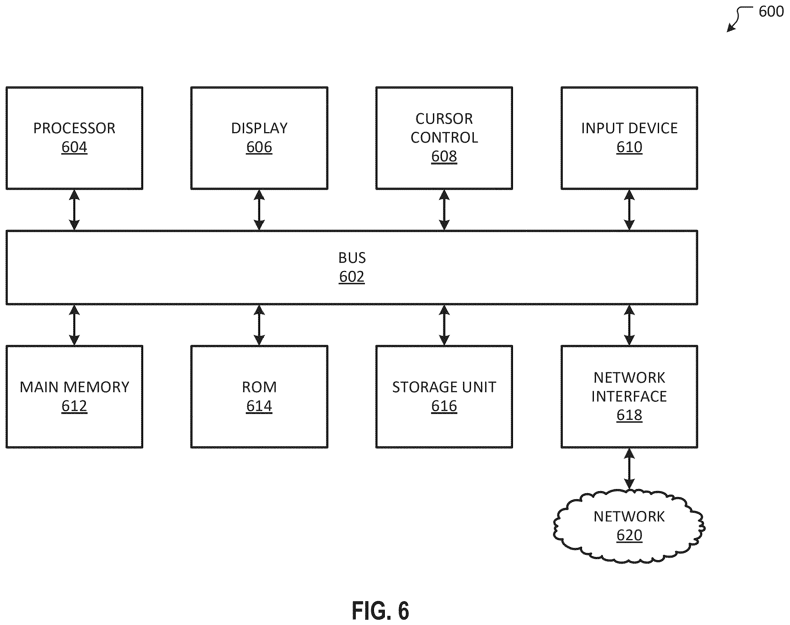

FIG. 6 is a simplified diagram showing a computing system for implementing a system 600 for collaborative map use in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods and/or processes (e.g., the method 100, etc.) disclosed herein are performed by the computing system 600. In some embodiments, the bus 602 is coupled to the processor 604, the display 606, the cursor control component 608, the input device 610, the main memory 612, the read only memory (ROM) 614, the storage unit 616, and/or the network interface 618. In certain embodiments, the network interface is coupled to a network 620. For example, the processor 604 includes one or more general purpose microprocessors. In some embodiments, the main memory 612 (e.g., random access memory (RAM), cache and/or other dynamic storage devices) is configured to store information and instructions to be executed by the processor 604. In certain embodiments, the main memory 612 is configured to store temporary variables or other intermediate information during execution of instructions to be executed by processor 604. For example, the instructions, when stored in the storage unit 616 accessible to processor 604, render the computing system 600 into a special-purpose machine that is customized to perform the operations specified in the instructions. In some embodiments, the ROM 614 is configured to store static information and instructions for the processor 604. In certain embodiments, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some embodiments, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to certain embodiments, a method for collaborative map use is provided. In some examples, the method includes receiving a first request of a map of a specific geographic area from a first user device; receiving a first language code that corresponds to a first language preferred by a first user associated with the first user device; selecting a first map tile variant from a plurality of map tile variants based on the first language code, each map tile variant of the plurality of map tile variants covering a same geographic area and including one or more respective text strings that are semantically equivalent; and transmitting an indication of the first map tile variant to the first user device to display a first map of the specific geographic area using the first map tile variant, the first displayed map including one or more first text strings in the first language. The method is performed using one or more processors. For example, the method is implemented according to at least FIG. 1A, FIG. 1B, and/or FIG. 2.

In some embodiments, the method further comprises: receiving a second request of a map of the specific geographic area from a second user, the second user collaborating with the first user; receiving a second language code that corresponds to a second language preferred by the second user, the second language being different from the first language; selecting a second map tile variant from the plurality of map tile variants based on the second language code; and transmitting the second map tile variant to a second user device to display a second map of the specific geographic area using the second map tile variant, the second displayed map including one or more second text strings in the second language, the one or more second text strings being semantically equivalent to the one or more first text strings. In some embodiments, the method further comprises: receiving the first map tile variant from a first tile source; and receiving the second map tile variant from a second tile source; wherein the first tile source is different from the second tile source. In certain embodiments, wherein the receiving a first language code that corresponds to a first language preferred by a first user associated with the first user device includes obtaining the first language code from a configuration associated with the first user.

In some embodiments, the method further comprises: identifying the first tile source based on the first language code. In some embodiments, the method further comprises: receiving an operation from the first user; updating a first base layer associated with the first map tile variant based on the received operation; and updating a second base layer associated with the second map tile variant based on a change to the first base layer, the first base layer being different from the second base layer. In some embodiments, the method further comprises: receiving an indication of a content layer associated with the first user; generating a first content layer corresponding to the content layer, the first content layer includes one or more first text labels in the first language; generating a second content layer corresponding to the content layer, the second content layer includes one or more second text labels in the second language, the one or more first text labels being semantically equivalent to the one or more second text labels; overlaying the first content layer with a first base layer associated with the first map tile variant; and overlaying the second content layer with a second base layer associated with the second map tile variant.

In certain embodiments, the content layer includes data of one or more objects and an object label associated with at least one of the one or more objects; wherein the first displayed map includes a first representation of the at least one of the one or more objects and a first object label in the first language that is semantically equivalent to the object label; wherein the second displayed map includes a second representation of the at least one of the one or more objects and a second object label in the second language that is semantically equivalent to the object label. In some embodiments, the method further comprises: receiving an object operation associated with the first object in the first displayed map; updating the first object label based on the object operation; and updating the second object label based on the updated first object label. In certain embodiments, the updating the second object label includes translating the first object label. In some embodiments, the method further comprises: identifying a first access right associated with the first user; identifying a second access right associated with the second user; and generating the first map tile variant based on the first access right and the second access right. In certain embodiments, the first access right allows access to a specific data; wherein the second access right does not allow access to the specific data; wherein the first map tile variant does not include the specific data. In some embodiments, the first tile source and the second tile source are stored or hosted at a respective server different from each other. In certain embodiments, the first map tile variant includes a set of first map tiles.

According to certain embodiments, a system for collaborative map use is provided. In some examples, the system includes: one or more memories comprising instructions stored thereon; and one or more processors configured to execute the instructions and perform a set of operations comprising: receiving a first request of a map of a specific geographic area from a first user device; receiving a first language code that corresponds to a first language preferred by a first user associated with the first user device; selecting a first map tile variant from a plurality of map tile variants based on the first language code, each map tile variant of the plurality of map tile variants covering a same geographic area and including one or more respective text strings that are semantically equivalent; and transmitting an indication of the first map tile variant to the first user device to display a first map of the specific geographic area using the first map tile variant, the first displayed map including one or more first text strings in the first language. For example, the system is implemented according to at least FIG. 1A, FIG. 1B, and/or FIG. 2.

In some embodiments, the set of operations further comprise: receiving a second request of a map of the specific geographic area from a second user, the second user collaborating with the first user; receiving a second language code that corresponds to a second language preferred by the second user, the second language being different from the first language; selecting a second map tile variant from the plurality of map tile variants based on the second language code; and transmitting the second map tile variant to a second user device to display a second map of the specific geographic area using the second map tile variant, the second displayed map including one or more second text strings in the second language, the one or more second text strings being semantically equivalent to the one or more first text strings. In some embodiments, the set of operations further comprise: receiving the first map tile variant from a first tile source; and receiving the second map tile variant from a second tile source; wherein the first tile source is different from the second tile source. In certain embodiments, wherein the receiving a first language code that corresponds to a first language preferred by a first user associated with the first user device includes obtaining the first language code from a configuration associated with the first user.

In some embodiments, the set of operations further comprise: identifying the first tile source based on the first language code. In some embodiments, the set of operations further comprise: receiving an operation from the first user; updating a first base layer associated with the first map tile variant based on the received operation; and updating a second base layer associated with the second map tile variant based on a change to the first base layer, the first base layer being different from the second base layer. In some embodiments, the set of operations further comprise: receiving an indication of a content layer associated with the first user; generating a first content layer corresponding to the content layer, the first content layer includes one or more first text labels in the first language; generating a second content layer corresponding to the content layer, the second content layer includes one or more second text labels in the second language, the one or more first text labels being semantically equivalent to the one or more second text labels; overlaying the first content layer with a first base layer associated with the first map tile variant; and overlaying the second content layer with a second base layer associated with the second map tile variant.

In certain embodiments, the content layer includes data of one or more objects and an object label associated with at least one of the one or more objects; wherein the first displayed map includes a first representation of the at least one of the one or more objects and a first object label in the first language that is semantically equivalent to the object label; wherein the second displayed map includes a second representation of the at least one of the one or more objects and a second object label in the second language that is semantically equivalent to the object label. In some embodiments, the set of operations further comprise: receiving an object operation associated with the first object in the first displayed map; updating the first object label based on the object operation; and updating the second object label based on the updated first object label. In certain embodiments, the updating the second object label includes translating the first object label. In some embodiments, the set of operations further comprise: identifying a first access right associated with the first user; identifying a second access right associated with the second user; and generating the first map tile variant based on the first access right and the second access right. In certain embodiments, the first access right allows access to a specific data; wherein the second access right does not allow access to the specific data; wherein the first map tile variant does not include the specific data. In some embodiments, the first tile source and the second tile source are stored or hosted at a respective server different from each other. In certain embodiments, the first map tile variant includes a set of first map tiles.

According to certain embodiments, a non-transitory computer-readable storage medium having instructions for collaborative map use that, when executed by one or more processors, cause the one or more processors to perform a set of operations comprising: receiving a first request of a map of a specific geographic area from a first user device; receiving a first language code that corresponds to a first language preferred by a first user associated with the first user device; selecting a first map tile variant from a plurality of map tile variants based on the first language code, each map tile variant of the plurality of map tile variants covering a same geographic area and including one or more respective text strings that are semantically equivalent; and transmitting an indication of the first map tile variant to the first user device to display a first map of the specific geographic area using the first map tile variant, the first displayed map including one or more first text strings in the first language. For example, the non-transitory computer-readable storage medium is implemented according to at least FIG. 1A, FIG. 1B, and/or FIG. 2.

In some embodiments, the set of operations further comprise: receiving a second request of a map of the specific geographic area from a second user, the second user collaborating with the first user; receiving a second language code that corresponds to a second language preferred by the second user, the second language being different from the first language; selecting a second map tile variant from the plurality of map tile variants based on the second language code; and transmitting the second map tile variant to a second user device to display a second map of the specific geographic area using the second map tile variant, the second displayed map including one or more second text strings in the second language, the one or more second text strings being semantically equivalent to the one or more first text strings. In some embodiments, the set of operations further comprise: receiving the first map tile variant from a first tile source; and receiving the second map tile variant from a second tile source; wherein the first tile source is different from the second tile source. In certain embodiments, wherein the receiving a first language code that corresponds to a first language preferred by a first user associated with the first user device includes obtaining the first language code from a configuration associated with the first user.

In some embodiments, the set of operations further comprise: identifying the first tile source based on the first language code. In some embodiments, the set of operations further comprise: receiving an operation from the first user; updating a first base layer associated with the first map tile variant based on the received operation; and updating a second base layer associated with the second map tile variant based on a change to the first base layer, the first base layer being different from the second base layer. In some embodiments, the set of operations further comprise: receiving an indication of a content layer associated with the first user; generating a first content layer corresponding to the content layer, the first content layer includes one or more first text labels in the first language; generating a second content layer corresponding to the content layer, the second content layer includes one or more second text labels in the second language, the one or more first text labels being semantically equivalent to the one or more second text labels; overlaying the first content layer with a first base layer associated with the first map tile variant; and overlaying the second content layer with a second base layer associated with the second map tile variant.

In certain embodiments, the content layer includes data of one or more objects and an object label associated with at least one of the one or more objects; wherein the first displayed map includes a first representation of the at least one of the one or more objects and a first object label in the first language that is semantically equivalent to the object label; wherein the second displayed map includes a second representation of the at least one of the one or more objects and a second object label in the second language that is semantically equivalent to the object label. In some embodiments, the set of operations further comprise: receiving an object operation associated with the first object in the first displayed map; updating the first object label based on the object operation; and updating the second object label based on the updated first object label. In certain embodiments, the updating the second object label includes translating the first object label. In some embodiments, the set of operations further comprise: identifying a first access right associated with the first user; identifying a second access right associated with the second user; and generating the first map tile variant based on the first access right and the second access right. In certain embodiments, the first access right allows access to a specific data; wherein the second access right does not allow access to the specific data; wherein the first map tile variant does not include the specific data. In some embodiments, the first tile source and the second tile source are stored or hosted at a respective server different from each other. In certain embodiments, the first map tile variant includes a set of first map tiles.

For example, some or all components of various embodiments of the present disclosure each are, individually and/or in combination with at least another component, implemented using one or more software components, one or more hardware components, and/or one or more combinations of software and hardware components. In an example, some or all components of various embodiments of the present disclosure each are, individually and/or in combination with at least another component, implemented in one or more circuits, such as one or more analog circuits and/or one or more digital circuits. In an example, while the embodiments described above refer to particular features, the scope of the present disclosure also includes embodiments having different combinations of features and embodiments that do not include all of the described features. In an example, various aspects of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be removed from the combination, and a combination may, for example, be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for collaborative map use, the method comprising:
receiving a first request of a map of a specific geographic area from a first user device;
receiving a first language code that corresponds to a first language preferred by a first user associated with the first user device;
selecting a first map tile variant from a plurality of map tile variants based on the first language code, each map tile variant of the plurality of map tile variants covering a same geographic area and including one or more respective text strings that are semantically equivalent; and
transmitting an indication of the first map tile variant to the first user device to display a first map of the specific geographic area using the first map tile variant, the first displayed map including one or more first text strings in the first language;
wherein the method is performed using one or more processors.

2. The method of claim 1, further comprising:
receiving a second request of a map of the specific geographic area from a second user, the second user collaborating with the first user;
receiving a second language code that corresponds to a second language preferred by the second user, the second language being different from the first language;
selecting a second map tile variant from the plurality of map tile variants based on the second language code; and
transmitting the second map tile variant to a second user device to display a second map of the specific geographic area using the second map tile variant, the second displayed map including one or more second text strings in the second language, the one or more second text strings being semantically equivalent to the one or more first text strings.

3. The method of claim 2, further comprising:
receiving the first map tile variant from a first tile source; and
receiving the second map tile variant from a second tile source;
wherein the first tile source is different from the second tile source.

4. The method of claim 3, wherein the receiving a first language code that corresponds to a first language preferred by a first user associated with the first user device includes obtaining the first language code from a configuration associated with the first user.

5. The method of claim 3 or claim 4, further comprising:
identifying the first tile source based on the first language code.

6. The method of any of claims 3 to 5, further comprising:
receiving an operation from the first user;
updating a first base layer associated with the first map tile variant based on the received operation; and
updating a second base layer associated with the second map tile variant based on a change to the first base layer, the first base layer being different from the second base layer.

7. The method of claim 2, further comprising:
receiving an indication of a content layer associated with the first user;
generating a first content layer corresponding to the content layer, the first content layer includes one or more first text labels in the first language;
generating a second content layer corresponding to the content layer, the second content layer includes one or more second text labels in the second language, the one or more first text labels being semantically equivalent to the one or more second text labels;
overlaying the first content layer with a first base layer associated with the first map tile variant; and
overlaying the second content layer with a second base layer associated with the second map tile variant.

8. The method of claim 7, wherein the content layer includes data of one or more objects and an object label associated with at least one of the one or more objects;
wherein the first displayed map includes a first representation of the at least one of the one or more objects and a first object label in the first language that is semantically equivalent to the object label;
wherein the second displayed map includes a second representation of the at least one of the one or more objects and a second object label in the second language that is semantically equivalent to the object label.

9. The method of claim 8, further comprising:
receiving an object operation associated with the first object in the first displayed map;
updating the first object label based on the object operation; and
updating the second object label based on the updated first object label.

10. The method of claim 9, wherein the updating the second object label includes translating the first object label.

11. The method of claim 3, further comprising:
identifying a first access right associated with the first user;
identifying a second access right associated with the second user; and
generating the first map tile variant based on the first access right and the second access right, and optionally:
wherein the first access right allows access to a specific data;
wherein the second access right does not allow access to the specific data; and
wherein the first map tile variant does not include the specific data.

12. The method of claim 3, wherein the first tile source and the second tile source are stored or hosted at a respective server different from each other.

13. The method of any preceding claim, wherein the first map tile variant includes a set of first map tiles.

14. A system for collaborative map use, the system comprising:
one or more memories comprising instructions stored thereon; and
one or more processors configured to execute the instructions and perform the method of any preceding claim.

15. A non-transitory computer-readable storage medium having instructions for collaborative map use that, when executed by one or more processors, cause the one or more processors to perform the method of any of claims 1 to 13.
